# EUROPEAN PATENT APPLICATION

(11) **EP 2 514 307 A2**
(43) Date of publication of application: **24.10.2012**
(21) Application number: 10803943.9
(22) Date of filing: 19.07.2010
(51) Int. Cl.: A01L 7/02, A01L 5/00, A01L 1/04

(54) **IMPROVED TOOL WITH REUSABLE HOLDER**

(30) Priority: 31.07.2009 ES 200901707
(71) Applicant: Lujo Herraduras, S.L., 41011 Sevilla (ES); Uttley Del Corral, Luis, 28006 Madrid (ES)
(72) Inventor: UTTLEY DEL CORRAL, Luis, E-28006 Madrid (ES)
(74) Representative: Gonzalez-Mogena Gonzalez, Inigo
(86) International application number: PCT/ES2010/070499
(87) International publication number: WO 2011/012752

(57) **Abstract**

Improved tool with reusable holder, comprising a U-shaped holder (1) with elongate ends, a tab (4), nail-holes (5) for the insertion of nails and at least three circular holes (6) with a peripheral stepped portion (7); and a disposable part (2) with a concave shape (3) that matches that of the holder, with an upper recess (8) corresponding to the tab (4), and at least three flared protrusions (9) positioned in line with the circular holes (6) in the holder (1). The flared protrusions (9) are in the form of vertically open studs with a wider part that engages in the stepped portion (7) of the circular holes (6). To secure the attachment, a plastic screw (10) is inserted in each flared protrusion (9), causing the flared protrusion (9) and the wider part thereof to expand over the stepped portion (7) of the circular hole (6) in which it is inserted.

## Description

### OBJECT OF THE INVENTION

The invention, as it is stated in the heading of this descriptive report, refers to an improved tool with a reusable holder, thereby providing several advantages and new features to the function that it is used for, which advantages and features will be described in the detail below and which represent an improvement over what is already known in the market in this field.

More specifically, the object of the invention is a tool that is applied to equine animals, particularly horses. It is also applicable to other animals, such as oxen, which work on hard surfaces, in order to prevent wear and protect their hooves from injury. The tool, which is of the type that has a disposable element that can be replaced (thereby avoiding having to resort to a farrier) and that can be fastened to any surface, has a system for coupling to the structurally improved holder, which facilitates installation to a great extent, thereby providing the advantage of making such a replacement quicker, more convenient and easier, but also more effective and long-lasting.

### FIELD OF APPLICATION OF THE INVENTION

The field of application of this invention is within the sector of industry engaged in manufacturing and supplying complements and auxiliary articles for animal care and protection, particularly equine animals, although not limited to them.

### BACKGROUND OF THE INVENTION

As it is well known, throughout the centuries horses have been shoed to prevent wear to their hooves, which shoeing has consisted of incorporating nailed iron tools.

In the current state of the art, plastic-based tools are known, which prevent an animal from slipping on asphalted surfaces. These tools, however, have the inconvenience of wearing rapidly, thereby forcing an owner to shoe an animal much more often.

To solve this problem, the applicant is the holder of an invention that puts forth an innovative tool formed by two parts: a holder that is nailed to an animal's hoof as if it were a conventional tool, and another, attachable and replaceable part, given that it is fitted using a system of clips or anchor points.

This solution, while it provides a satisfactory response to the aims that are sought, presents certain aspects that can be improved, particularly those referring to the fastening system between both parts of the tool. The objective of the invention is a new tool of this type that is improved with respect to the anchoring system. It should be pointed out that there is no other, known invention that presents similar structural and constituent elements.

### EXPLANATION OF THE INVENTION

Thus, the perfected tool with a reusable holder that this invention proposes is configured as a novelty within its field of application, and the characterising details that distinguish it from what is already known are adequately included in the final claims attached to this descriptive report.

Specifically, what the invention puts forth is a tool that allows the rapid replacement thereof without having to use a farrier, wherefore the owner or caretaker of a horse is the one who replaces the tool, at least the part that is subject to wear, without requiring any type of specific training.

Therefore, the proposed tool is of the type that is composed of two, separate and independent parts, one of which is a holder prepared to be nailed to the hoof of a horse in the traditional way, and the other part is a part that is fastened to said holder and is interchangeable and disposable. Both parts are made of plastic.

This disposable part has a concave section that is similar to that of the holder so that both parts can be adapted and fitted to form a solid assembly, and it can be changed or replaced without having to remove the holder nailed to the hoof.

Moreover, based on the described configuration, the proposed tool has a holder part that has a longer configuration at the ends, thereby providing the advantage of including more nails to fasten it to an animal's hoof.

In turn, the disposable part, in the complementary concave section where it is housed on the holder, has several flared protrusions as the means for fastening. When the disposable part is connected to the holder, the flared protrusions open up, where a third element is incorporated: a plastic screw specifically designed to sit on said flared protrusions, thereby increasing the fastening between the holder and the disposable part.

Thus, while the previously known fastening method between both parts used clips, which were subject to detachment in the event of a slip, now the fastening method between both parts is by pressure and screws.

Thus, using a simple screwdriver, a user can install the tool in barely a few seconds, without needing specialised tools but achieving a secure and effective fastening, given that the screw causes the flared protrusion to open up and fit more tightly to the holder where stepped holes have been provided, which is where the edge of the flared protrusion couples when it is widened by the screw.

The described, perfected and reusable tool with a holder therefore represents an innovative structure, with structural and constituent elements that have been unknown for this purpose up to now, which are the reasons that, together with its practical utility, give it sufficient grounds to obtain the privilege of exclusivity that is sought.

### DESCRIPTION OF THE DRAWINGS

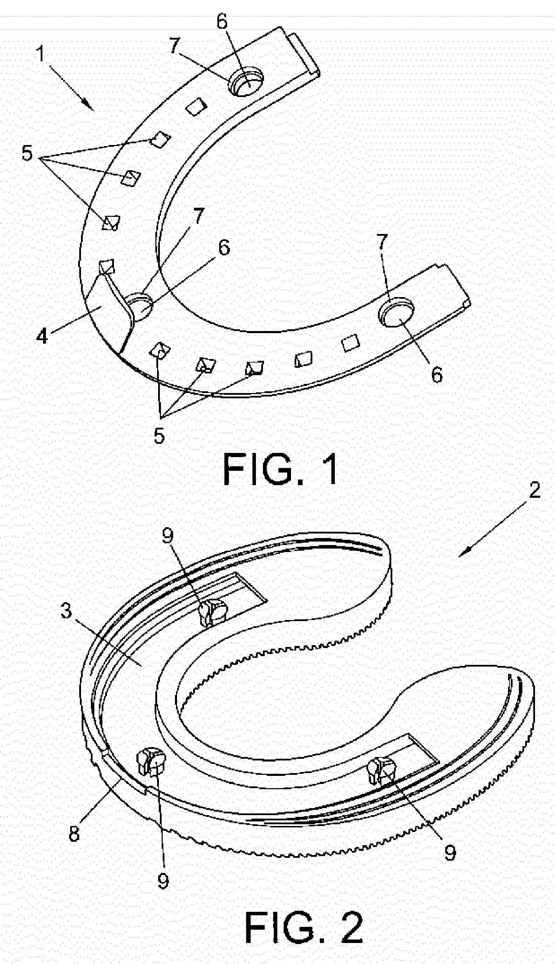

To complete the description that is being made and in order to help with a better understanding of the characteristics of the invention, a set of drawings is attached herewith as an integral part of this descriptive report, in which the following has been represented for merely illustrative purposes and not as a limitation thereof:
Figure number 1. It shows a perspective view of the holder that is nailed to the hoof of an animal, where the configuration thereof and the parts and elements of which it is composed can be seen.
Figure number 2. It shows a perspective view of the disposable part, where the configuration thereof and the parts of which it is composed for coupling to the holder shown in figure 1 can be seen.
Figure number 3. It shows a detailed schematic of the coupling by the flared protrusions in the holes and the plastic screw.

### PREFERRED EMBODIMENT OF THE INVENTION

In view of said figures, and in accordance with the numbering used, an example of the preferred embodiment of the invention can be observed in the figures, which embodiment includes the parts and elements that are indicated and described below.

Thus, as it can be appreciated in said figures, the perfected tool with a reusable holder in question is composed of two separate parts: there is the holder (1), shown in Figure 1, which is prepared to be nailed to the hoof of a horse in the traditional manner, meaning nailed by a farrier; and a disposable part (2), made of plastic material, shown in Figure 2, which is fastened to said holder and which can be easily replaced and is disposable. This latter part has a concave section (3), which is similar to that of the holder (1), so that both parts can be adapted and fastened to form a solid assembly.

As it can be observed in Figure 1, the shape of the holder (1) is that of a "U" with extended ends. It also has a tab (4) at the top-central part and a multitude of small perforations or nail holes (5) for inserting nails that, distributed along the surface thereof, allow it to be fastened to the hoof of a horse. It also has three circular holes (6) that allow it to be attached to the disposable part (2), which holes have a stepped portion (7).

In turn, and as it can be seen in Figure 2, in the concave section (3) that is provided to be housed in the holder (1), which has a complementary shape to the same and where there is an upper recess (8) that matches the tab, the disposal part (2) incorporates at least three flared protrusions (9), positioned in line with the circular holes (6) of the holder.

Said flared protrusions (9) are in the form of vertically open studs, such that when they are inserted in the circular holes (6) of the holder (1), they are compressed and, once they have passed through said hole, they open up, whereby the wider part extends over the stepped portion (7) of the circular holes, thereby preventing them from detaching.

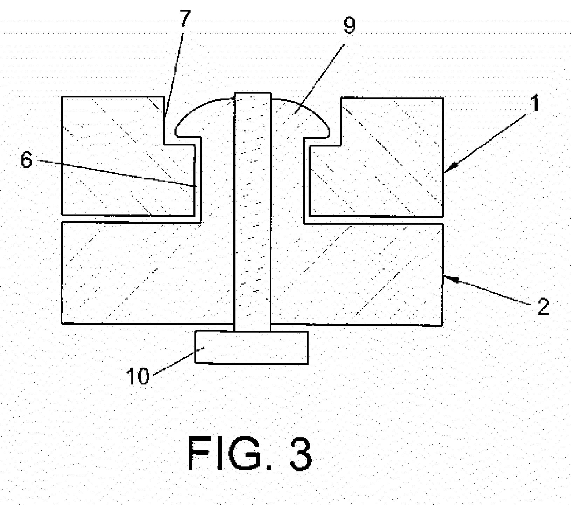

In addition and in order to reinforce the fastening of the disposable part (2) to the holder (1), the insertion of a plastic screw (10) in the flared protrusions (9) is contemplated, which screw is specifically designed for such purpose. It increases the fastening between both parts of the tool, given that by introducing the screw, it causes the flared protrusion (9) to widen and expand over the stepped portion (7) of the circular hole (6) where it is housed, as it can be seen in Figure 3.

Having sufficiently described the nature of this invention, as well as the way to put it into practice, no further explanation of the same is deemed necessary so that any expert on the subject can understand the scope and advantages that are derived therefrom. Moreover, it is hereby stated that, within the essence of the invention, it could be put into practice in other forms of embodiment that differ in detail from what is indicated as an example, to which embodiments the protection that is claimed will likewise extend, as long as the fundamental principle thereof is not altered, changed or modified.

## Claims

1. AN IMPROVED TOOL WITH A REUSABLE HOLDER, of the type that is composed of two independent parts, which consist of a holder (1) with nail holes (5) for nailing it to the hoof of an animal, and a disposal part (2) of plastic material, which is fastened to said holder and is interchangeable and disposable and which has a concave section (3) that is similar to that of the holder (1) so that both parts can be adapted and fastened to form a solid assembly. It is **characterised by** the fact that the holder (1) has a U-shaped configuration with elongated ends, furthermore presenting a tab (4) and nail holes (5) for inserting nails; at least three circular holes (6) that allow it to be coupled to the disposable part (2); and by the fact that the disposal part (2), in the concave section (3), has an upper recess (8) that matches the tab (4), and it incorporates at least three flared protrusions (9), positioned in line with the circular holes (6) of the holder (1), which are inserted in the holes to fasten the disposable part (2) to the holder (1).

2. AN IMPROVED TOOL WITH A REUSABLE HOLDER, according to claim 1, **characterised by** the fact that the circular holes (6) of the holder (1) have a stepped portion (7) and by the fact that the flared protrusions (9) in the form of vertically open studs have a wide, upper part, which, when inserted in the circular holes (6) of the holder (1), engages the stepped portion (7) of said circular holes (6), thereby preventing them from detaching.

3. AN IMPROVED TOOL WITH A REUSABLE HOLDER, according to claims 1 and 2, **characterised by** the fact that, in addition to and in order to reinforce said fastening of the disposable part (2) to the holder (1), the insertion of a plastic screw (10) in the flared protrusions (9) is contemplated, which increases the fastening by causing the flared protrusion (9) to widen and extend over the stepped portion (7) of the circular hole (6) in which it is housed.
